Europäisches Patentamt

European Patent Office

Office européen des brevets

(19)

(11) Veröffentlichungsnummer: **0 313 772 B1**

# EUROPÄISCHE PATENTSCHRIFT

(45) Veröffentlichungstag der Patentschrift: **12.08.92**

(51) Int. Cl.⁵: **B60R 25/00**

(21) Anmeldenummer: **88114490.1**

(22) Anmeldetag: **06.09.88**

(54) **Kombinierte Zentralverriegelungs- und Einbruch-Diebstahl-Warn-Anlage für Verschlüsse an einem Kraftfahrzeug.**

(30) Priorität: **30.10.87 DE 3736776**

(43) Veröffentlichungstag der Anmeldung:
**03.05.89 Patentblatt 89/18**

(45) Bekanntmachung des Hinweises auf die
Patenterteilung:
**12.08.92 Patentblatt 92/33**

(84) Benannte Vertragsstaaten:
**ES FR GB IT**

(56) Entgegenhaltungen:
**DE-A- 2 915 213
DE-A- 3 316 793
DE-C- 3 516 732
US-A- 3 852 614**

(73) Patentinhaber: **Daimler-Benz Aktiengesellschaft
Postfach 600202 Mercedesstrasse 136
W-7000 Stuttgart 60(DE)**

(72) Erfinder: **Robitschko, Peter
Kleines Egart 7
W-7032 Sindelfingen 6(DE)**
Erfinder: **Claar, Klaus
Sommerhofenstrasse 108
W-7032 Sindelfingen 1(DE)**
Erfinder: **Deischl, Hans
Goethestrasse 34
W-7031 Jettingen(DE)**
Erfinder: **Schumacher, Josef
Fürstenbergstrasse 32
W-7410 Reutlingen 26(DE)**

## Beschreibung

Die Erfindung bezieht sich auf eine kombinierte Zentralverriegelungsanlage (ZVA) und Einbruch-Diebstahl-Warnanlage (EDW) nach dem Oberbegriff der unabhängigen Ansprüche 1 und 10.

Eine gattungsgemäße ZVA/EDW ist bekannt (DE-C-35 16 732). Sie ermöglicht eine komfortable einheitliche Steuerung von ZVA und EDW über eine Schließstelle an mindestens einer Tür, wobei die EDW mit demselben Umschaltkontakt wie die ZVA gesteuert wird. Bei mit einem bestimmten Schlüssel an dieser Schließstelle verriegelter ZVA ist stets auch die EDW scharf, d. h. alarmbereit geschaltet, während die EDW bei Entriegelung der ZVA mit diesem Schlüssel an dieser Schließstelle entschärft wird.

Über die Ausschaltung insbesondere eines durch befugte Benutzer versehentlich ausgelösten Alarms wird in der DE-C-35 16 732 nichts ausgesagt.

Eine Diebstahlsicherungsanlage mit einer zusätzlichen Schalteinrichtung zur Löschung eines durch Fehlbetätigung ausgelösten Alarms ist ebenfalls bekannt (DE-C-29 15 213). Deren gesamte Steuerung kann nur vom Fahrgastraum des Kraftfahrzeuges aus vorgenommen werden, sowohl Schärfen/Entschärfen als auch die erwähnte Löschung. Letztere wird durch gleichzeitiges Betätigen zweier verschiedener Tasten eines am Armaturenbrett des Kraftfahrzeuges angeordneten Tastenfeldes vorgenommen. Ein Zusammenhang zwischen dem Ver-/Entriegelungszustand einer ZVA und der Alarmbereitschaft der Diebstahlsicherung ist in der DE-C-29 15 213 nicht offenbart.

Die Erfindung hat die Aufgabe, eine gattungsgemäße kombinierte ZVA/EDW so auszubilden, daß befugten Fahrzeugbenutzern eine einfache, komfortable und bezüglich des Fahrzeugsicherungszustandes eindeutige Möglichkeit zur Löschung eines versehentlich ausgelösten Alarms an die Hand gegeben wird.

Diese Aufgabe wird mit den kennzeichnenden Merkmalen der unabhängigen Ansprüche 1 und 10 erfindungsgemäß gelöst.

Die kennzeichnenden Merkmale der abhängigen Ansprüche offenbaren vorteilhafte Weiterbildungen der erfindungsgemäßen kombinierten ZVA/EDW nach dem Anspruch 1.

Dem Fahrzeugbenutzer wird es mit der erfindungsgemäßen Anlage ermöglicht, einen Fehlalarm mit seinem Fahrzeugschlüssel außerhalb des Fahrzeugs zu löschen. Dies kann je nach Ausführung schon mit dem Einstecken des Schlüssels in den entsprechend ausgeführten Schließzylinder oder beim darauffolgenden Drehen um einen relativ kleinen Winkel erfolgen, da es nur auf die Betätigung des in an sich bekannter Weise am Schließzylinder angeordneten elektrischen (Mikro-) Schalters ankommt.

Die automatische Potentialabfrage vom Steuergerät der EDW an den Umschaltkontakt(en) der ZVA-Steuerung dient dann der erneuten Synchronisierung von ZVA und EDW. Kurze Zeit nach der Alarmlöschung kann der Benutzer des Fahrzeugs in gewohnter Weise an der Stellung der Innensicherungsknöpfe der Türen oder dgl. erkennen, ob das Fahrzeug entriegelt oder verriegelt ist. Er kann sich darauf verlassen, daß die EDW bei verriegeltem Fahrzeug scharfgeschaltet ist.

Eine kurze Wartezeit vor der Potentialabfrage stellt sicher, daß ein bei Schlüsseldrehung etwa ausgelöster Ver- oder Entriegelungsvorgang der ZVA vor der Abfrage abgeschlossen ist. Die Wartezeit ist aber nicht zwingend notwendig, wenn die Potentialabfrage nur an dem Umschaltkontakt vorgenommen wird, der der alarmlöschenden Schließstelle zugeordnet ist. Diese Ortung ist einfach in das EDW-Steuergerät zu integrieren. Sie erübrigt sich natürlich, wenn - als Minimalausstattung - nur eine Schließstelle mit zugeordnetem Umschaltkontakt und elektrischem Schalter vorgesehen ist.

Die Vorzüge der gattungsgemäßen kombinierten ZVA/EDW, insbesondere auch die Verwendung des vorteilhaften Hauptschlüssel-/Nebenschlüssel-Systems, bleiben erhalten.

Im folgenden wird ein in der Zeichnung schematisch dargestelltes Ausführungsbeispiel der erfindungsgemäßen kombinierten ZVA/EDW beschrieben. Es zeigen

Figur 1   ein Schaltschema der Anlage mit mehreren Schließstellen und Umschaltkontakten und

Figur 2   ein Flußdiagramm zur Funktionserläuterung mit Ablaufvarianten a) und b).

Eine erfindungsgemäße Anlage in einem Kraftfahrzeug besteht aus einer ZVA 1 - auf die hier nicht näher eingegangen wird - und einer EDW 2 sowie aus einer Fahrertür - Schließstelle 3, einer Beifahrertür - Schließstelle 4 und einer Heckdeckel-Schließstelle 5, die lediglich als Funktionsblöcke dargestellt sind.

Die drei Schließstellen 3, 4 und 5 sind jeweils mit einem Umschaltkontakt 3.1, 4.1, 5.1 gekoppelt, die sowohl bei Schlüsselbetätigung der Schließstellen als auch durch - nicht dargestellte - Stellelemente der ZVA 1 über die angedeuteten Schaltgestänge oder dgl. umgeschaltet werden und dabei ihr elektrisches Potential von Plus auf Masse bzw. umgekehrt ändern. Durch jeweils den ersten dieser Potentialwechsel, der in der Regel an einer manuell betätigten Schließstelle erzeugt wird, wird die ZVA 1 zur Verriegelung bzw. Entriegelung sämtlicher mit Stellelementen versehener Verschlüsse in bekannter Weise über Verbindungsleitungen 1.1, 1 .2, 1 .3 angesteuert.

Die Umschaltkontakte 3.1 und 4.1 der Fahrer- bzw. Beifahrertür-Schließstellen 3 und 4 sind ferner noch mit der EDW 2 verbunden. Ebenso ist je ein elektrischer (Schließer-) Schalter 3.2 bzw. 4.2 der Schließstellen 3 bzw. 4 mit der EDW 2 elektrisch verbunden. Die elektrischen Schalter 3.2 und 4.2 können nur mittels eines bestimmten Schlüssels betätigt werden. Dieser nicht dargestellte Schlüssel ist vorteilhaft ein Haupt- bzw. Generalschlüssel, während mit einem Nebenschlüssel nur die Schließstellen 3 und 4 und deren Umschaltkontakte 3.1, 4 .1 betätigt werden.

Die EDW 2 ist schematisch in ein Steuergerät 2.1, eine Schaltvorrichtung 2.2 und eine Zeitschaltung 2.3 gegliedert.

Der Schaltvorrichtung 2.2 werden die Potentialwechsel der Umschaltkontakte 3.1 und 4.1 und Schaltsignale der elektrischen Schalter 3.2 und 4.2 zugeleitet. In bekannter Weise schaltet die Schaltvorrichtung 2.2 das Steuergerät 2.1 scharf, d. h. alarmbereit, wenn von einer der Schließstellen 3 oder 4 aus zunächst ein Schaltsignal des jeweiligen elektrischen Schalters 3.2 oder 4.2 und dann zusätzlich ein Potentialwechsel des zugehörigen Umschaltkontaktes 3.1 oder 4.1 von Plus auf Masse vorliegt. Die Entschärfung der EDW erfolgt regelmäßig entsprechend mit einem Potentialwechsel von Masse nach Plus. Jedenfalls wird der elektrische Schalter 3.2 oder 4.2 in der Schließstelle vor dem jeweiligen Umschaltkontakt betätigt.

Alarm wird ausgelöst, wenn dem scharfgeschalteten Steuergerät 2.1 über einen oder mehrere der Eingänge 2.4 ein Signal zugeführt wird. Beispielsweise ist schließlich über eine Alarmleitung 2.5 ein Signalhorn 6 an das Steuergerät 2.1 der EDW 2 angeschlossen, welches durch ein Alarmausführungssignal aktiviert wird. Selbstverständlich sind auch andere Alarmsignalgeber, z. B. optische oder funktechnische, verwendbar. Über einen Zweig 2.6 ist die Alarmleitung 2.5 zur Übertragung des Alarmausführungssignals auch an die Schaltvorrichtung 2.2 und an die Zeitschaltung 2.3 angeschlossen.

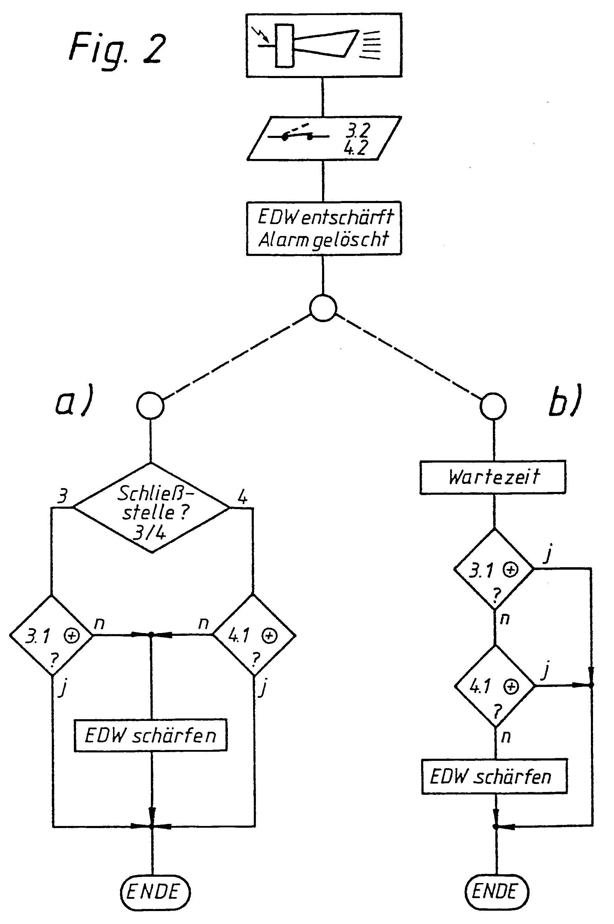

Aus dem Flußdiagramm der Figur 2 wird die erfindungsgemäße Funktion der Fehlalarmlöschung und damit auch der Zweck des genannten Zweiges 2.6 der Alarmleitung 2.5 ersichtlich.

Das Flußdiagramm startet im Alarmausführungszustand der EDW 2, d. h. das Signalhorn 6 wird über die Alarmleitung 2.5 mit dem Alarmausführungssignal aktiviert, wie symbolisch dargestellt. Der befugte Fahrzeugbenutzer betätigt mit seinem Fahrzeugschlüssel einen der elektrischen Schalter 3.2 oder 4.2. Das entstehende Schaltsignal gelangt zur Schaltvorrichtung 2.2, an welcher auch ein Alarmausführungssignal vorliegt. Beide Signale werden dahingehend verknüpft, daß der Alarm gelöscht und die EDW 2 entschärft wird.

Zwei verschiedene weitere Abläufe a) und b) sind nunmehr mit gleichen technischen Mitteln zu verwirklichen.

Im Ablauf a) wird mit dem Löschen des Alarms bzw. des Alarmausführungssignals die als Halteschaltung ausgebildete Zeitschaltung 2.3 in der Weise aktiviert, daß sie anstelle eines der elektrischen Schalter 3.2 oder 4.2 die Schaltvorrichtung 2.2 ansteuert.

Diese weist für den vorgesehenen Ablauf eine Speicherschaltung auf, aus welcher ermittelt werden kann, von welcher Schließstelle aus (3 oder 4) die Alarmlöschung erfolgte; im Flußdiagramm ist diese Ermittlung als eine erste Verzweigung dargestellt.

Von der Zeitschaltung 2.3 aktiviert, stellt die Schaltvorrichtung 2.2 auch bei offenen Schaltern 3.2 bzw. 4.2 eine Verbindung zwischen den Umschaltkontakten 3.1 oder 4.1 und dem Steuergerät 2.1 der EDW 2 her. Im vorliegenden Ablauf wird nur derjenige Umschaltkontakt abgefragt, von dessen Schließstelle aus die Alarmlöschung erfolgte - dargestellt in den beiden nebeneinanderstehenden Verzweigungen.

Liegt Plus-Potential an dem Umschaltkontakt, so ist die ZVA 1 entriegelt; eine Scharfschaltung der EDW 2 unterbleibt (j-Zweige). Liegt hingegen Masse-Potential an (n-Zweige), so wird die EDW 2 automatisch wieder scharfgeschaltet. Das Fahrzeug bleibt verriegelt und alarmgesichert.

Im Ablauf a) wird davon ausgegangen, daß die ZVA 1 zuverlässig entsprechend dem an einem Umschaltkontakt anliegenden Potential ver- oder entriegelt ist. Hat der Fahrzeugbenutzer bei der Alarmlöschung den Schlüssel weiter gedreht, als zur Betätigung des elektrischen Schalters notwendig ist, so ist auch der betreffende Umschaltkontakt bereits endgültig betätigt. Ein Potentialwechsel ist nicht mehr selbsttätig bzw. von der ZVA 1 gesteuert möglich. Daher erübrigt sich für den geschilderten Ablauf eine Wartezeit vor der Abfrage des Umschaltkontakt-Potentials. Eine gewisse Zeitspanne für die Fahrzeugsicherung wird einzig durch die - kurze - Zeitkonstante der Halteschaltung vorgegeben.

In der Ablaufvariante b) ist die Zeitschaltung als Verzögerungsschalter ausgelegt, welcher nach der Alarmlöschung eine vorgegebene Wartezeit - die mindestens der üblichen Betriebsdauer der ZVA 1 entspricht verstreichen läßt und dann befristet die Schaltvorrichtung 2.2 aktiviert. Diese stellt dann die Verbindungen zwischen beiden Umschaltkontakten 3.1 und 4.1 und dem Steuergerät 2.1 her. Die Potentiale bei der Umschaltkontakte werden im Steuergerät abgefragt. Zur automatischen Wiederscharfschaltung der EDW 2 ist es erforderlich, daß beide Umschaltkontakte negatives Potential aufweisen, die ZVA 1 also verriegelt ist. In diese Potentialabfrage kann selbstverständlich auch der Umschaltkontakt 5.1 der Schließstelle 5 am Heckdeckel des Fahrzeugs einbezogen werden.

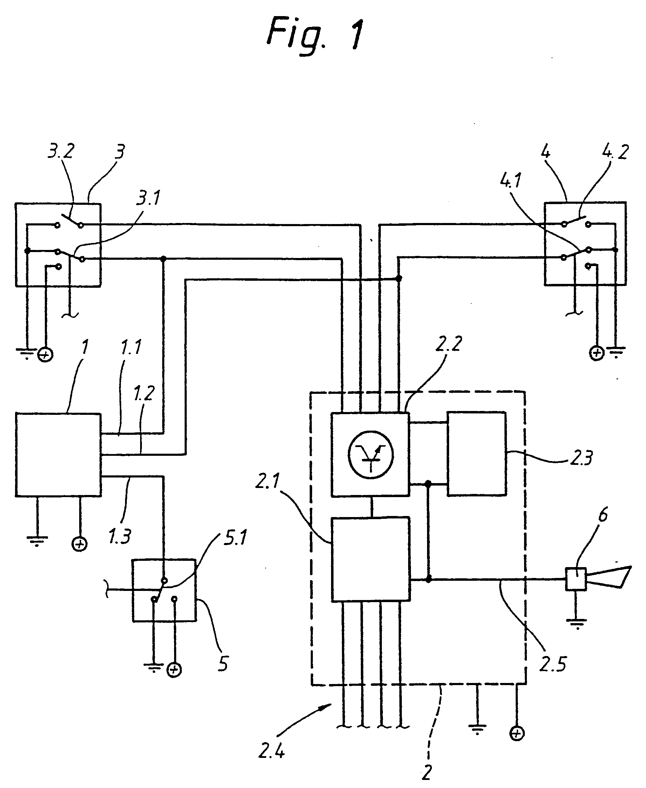

Es ist klar, daß für den Ablauf b) eine Wartezeit vorgesehen werden muß. Sie stellt sicher, daß auch bei Ansteuerung der ZVA 1 mit der Alarmlöschung alle Umschaltkontakte vor der Potentialabfrage in ihre Endlage gelangt sind. In dieser Variante ist hingegen keine Ortung der alarmlöschenden Schließstelle notwendig, so daß die in Figur 1 dargestellten Einzelleitungen zwischen den elektrischen Schaltern 3.2, 4.2 und der EDW 2 durch einen gemeinsamen Strang ersetzt werden könnten.

Natürlich ist auch - entsprechend dem unabhängigen Anspruch 10 - mit der Alarmlöschung an einer ersten Schließstelle und Potentialabfrage nach Wartezeit am Umschaltkontakt nur mindestens einer anderen Schließstelle die gestellte Aufgabe gelöst.

**Patentansprüche**

1. Kombinierte Zentralverriegelungs- und Einbruch-Diebstahl-Warn-Anlage für Verschlüsse an einem Kraftfahrzeug, welche von mindestens einer ersten, insbesondere in der Fahrertür angeordneten, Schließstelle (3) aus mit mindestens einem bestimmten Schlüssel durch potentialwechselndes Umschalten eines mit der Schließstelle (3) gekoppelten elektrischen Umschaltkontaktes (3.1) einheitlich steuerbar ist, indem der Umschaltkontakt (3.1)
   - zum einen die Zentralverriegelungsanlage (ZVA, 1) unmittelbar steuert,
   - zum anderen die Einbruch-Diebstahl-Warn-Anlage (EDW, 2) mittelbar über eine Schaltvorrichtung (2.2) steuert, die den Umschaltkontakt (3.1) mindestens dann mit einem Steuergerät (2.1) der EDW (2) verbindet, wenn ein in der Schließstelle (3) angeordneter elektrischer Schalter (3.2) wenigstens mittelbar durch den bestimmten Schlüssel betätigt wird,

   wobei eine Verriegelung der ZVA (1) mit diesem Schlüssel an der Schließstelle (3) eine Scharfschaltung der EDW (2) und eine Entriegelung der ZVA (1) mit diesem Schlüssel an der Schließstelle (3) eine Entschärfung der EDW (2) mittels des gemeinsamen Umschaltkontakts (3.1) bewirkt,
   **dadurch gekennzeichnet,**
   daß dem Steuergerät (2.1) der EDW (2) bei Alarmausführung durch Betätigung des elektrischen Schalters (3.2) ein Signal zur Entschärfung der EDW (2) unter gleichzeitiger Alarmlöschung zugeführt wird und daß in Abhängigkeit von dem Potential des der ersten Schließstelle (3) zugeordneten, nach der Alarmlöschung mit dem Steuergerät (2.1) befristet verbundenen Umschaltkontakts (3.1)
   - bei einem dem Verriegelungszustand der ZVA (1) entsprechenden Potential eine automatische Wiederscharfschaltung der EDW (2) erfolgt, jedoch
   - bei einem dem Entriegelungszustand der ZVA (1) entsprechenden Potential die EDW (2) entschärft bleibt.

2. Anlage nach Anspruch 1,
   **dadurch gekennzeichnet,**
   daß eine bestimmte, mindestens der Dauer eines vollständigen Ver- bzw. Entriegelungsvorganges der ZVA (1) entsprechende Zeitspanne von der Alarmlöschung bis zur Abfrage des Umschaltkontakt-Potentials durch das Steuergerät (2.1) der EDW (2) mittels einer Zeitschaltung (2.3) vorgegeben ist.

3. Anlage nach Anspruch 2,
   **dadurch gekennzeichnet,**
   daß das Steuergerät (2.1) der EDW (2) nach Alarmlöschung mittels des elektrischen Schalters (3.2) durch Ansteuerung der Schaltvorrichtung (2.2) durch eine dem elektrischen Schalter (3.2) funktionell parallelgeschaltete Halteschaltung (2.3) für die bestimmte Zeitspanne mit dem Umschaltkontakt (3.1) verbunden bleibt.

4. Anlage nach Anspruch 2,
   **dadurch gekennzeichnet,**
   daß das Steuergerät (2.1) der EDW (2) nach Alarmlöschung mittels des elektrischen Schalters (3.2) durch Ansteuerung der Schaltvorrichtung (2.2) durch ein die bestimmte Zeitspanne abmessendes Zeitglied (2.3) befristet mit dem Umschaltkontakt (3.1) verbunden wird.

5. Anlage nach Anspruch 3 oder 4,
   **dadurch gekennzeichnet,**
   daß weitere Schließstellen (4, 5) mit zugeordneten Umschaltkontakten (4.1, 5.1) vorgesehen sind und daß für eine Wiederscharfschaltung der EDW (2) am Ende der Zeitspanne das Potential des der Schließstelle (3) an der Fahrertür zugeordneten Umschaltkontaktes (3.1) und mindestens eines weiteren Umschaltkontaktes (4.1 oder/und 5.1) dem Verriegelungszustand der ZVA (1) entsprechen müssen, wobei sämtliche Umschaltkontakte (3.1, 4.1, 5.1) ferner mit den jeweiligen Schließstellen (3, 4, 5) zugehörigen ZVA-Stellelementen gekoppelt sind.

**6.** Anlage nach Anspruch 1,
**dadurch gekennzeichnet,**
daß ferner eine weitere Schließstelle (4) mit einem elektrischen Schalter (4.2) zur Alarmlöschung und Ansteuerung der Schaltvorrichtung (2.2), die das Steuergerät (2.1) der EDW (2) mit dem dieser Schließstelle (4) ferner zugeordneten Umschaltkontakt (4.1) verbindet, versehen ist und daß jeweils das Potential desjenigen Umschaltkontaktes (3.1 oder 4.1) für eine Wiederscharfschaltung der EDW maßgeblich ist, von dessen zugeordneter Schließstelle (3 bzw. 4) aus mittels deren jeweiligem elektrischen Schalter (3.2 bzw. 4.2) die Alarmlöschung vorgenommen wurde.

**7.** Anlage nach Anspruch 6,
**dadurch gekennzeichnet,**
daß die elektrischen Schalter (3.2, 4.2) der Schließstellen (3, 4) durch Drehen des bestimmten Schlüssels unabhängig von dessen Drehrichtung und jeweils vor dem Umschalten der den Schließstellen (3, 4) zugeordneten Umschaltkontakte (3.1, 4.1) betätigt werden.

**8.** Anlage nach Anspruch 6,
**dadurch gekennzeichnet,**
daß die elektrischen Schalter (3.2, 4.2) der Schließstellen (3, 4) bereits beim vollständigen Einstecken des bestimmten Schlüssels betätigt werden.

**9.** Anlage nach Anspruch 6, in welcher mindestens eine mit einem elektrischen Schalter versehene Schließstelle mit einem Haupt- und mit einem Nebenschlüssel betätigt werden kann,
**dadurch gekennzeichnet,**
daß der bestimmte Schlüssel zur einheitlichen Steuerung der ZVA/EDW von beiden Schließstellen aus der Hauptschlüssel ist, während mit dem Nebenschlüssel keine Betätigung des jeweiligen elektrischen Schalters (3.2, 4.2) beider Schließstellen (3, 4), sondern lediglich die Steuerung der ZVA (1) mittels der zugeordneten Umschaltkontakte (3.1, 4.1) möglich ist.

**10.** Kombinierte Zentralverriegelungs- und Einbruch-Diebstahl-Warn-Anlage für Verschlüsse an einem Kraftfahrzeug, welche von mindestens einer ersten, insbesondere in der Fahrertür angeordneten, Schließstelle (3) aus mit mindestens einem bestimmten Schlüssel durch potentialwechselndes Umschalten eines mit der Schließstelle (3) gekoppelten elektrischen Umschaltkontaktes (3.1) einheitlich steuerbar ist, indem der Umschaltkontakt (3.1)
- zum einen die Zentralverriegelungsanlage (ZVA, 1) unmittelbar steuert,

- zum anderen die Einbruch-Diebstahl-Warn-Anlage (EDW, 2) mittelbar über eine Schaltvorrichtung (2.2) steuert, die den Umschaltkontakt (3.1) mindestens dann mit einem Steuergerät (2.1) der EDW (2) verbindet, wenn ein in der Schließstelle (3) angeordneter elektrischer Schalter (3.2) wenigstens mittelbar durch den bestimmten Schlüssel betätigt wird,

wobei eine Verriegelung der ZVA (1) mit diesem Schlüssel an der Schließstelle (3) eine Scharfschaltung der EDW (2) und eine Entriegelung der ZVA (1) mit diesem Schlüssel an der Schließstelle (3) eine Entschärfung der EDW (2) mittels des gemeinsamen Umschaltkontakts (3.1) bewirkt,
**dadurch gekennzeichnet,**
daß dem Steuergerät (2.1) der EDW (2) bei Alarmausführung durch Betätigung des elektrischen Schalters (3.2) ein Signal zur Entschärfung der EDW (2) unter gleichzeitiger Alarmlöschung zugeführt wird und daß in Abhängigkeit von dem Potential nur mindestens eines einer zweiten Schließstelle (4 oder/und 5) oder einem die zweite Schließstelle (4 oder/und 5) fremdkraftgesteuert betätigenden Stellelement der ZVA (1) zugeordneten Umschaltkontaktes (4.1 oder/und 5.1), welcher nach Alarmlöschung und dem Ablauf einer bestimmten Zeitspanne mit dem Steuergerät (2.1) befristet verbunden wird,
- bei einem dem Verriegelungszustand der ZVA (1) entsprechenden Potential eine automatische Wiederscharfschaltung der EDW (2) erfolgt, jedoch
- bei einem dem Entriegelungszustand der ZVA (1) entsprechenden Potential die EDW (2) entschärft bleibt.

**Claims**

**1.** Combined central locking and burglar alarm system for locks on a motor vehicle, which can be uniformly controlled from at least a first locking point (3), which is particularly arranged in the driver's door, by means of at least one particular key, by means of the potential-changing switch-over of an electric change-over contact (3.1) coupled to the locking point (3), in that the change-over contact (3.1)
- directly controls the central locking system (ZVA, 1), on the one hand,
- indirectly controls the burglar alarm system (EDW, 2), on the other hand, by a switching device (2.2) which connects the change-over contact (3.1) to a control device (2.1) of the EDW (2) at least once an electric switch (3.2) arranged in the locking point (3) is operated at least indirectly by means of a particular key

in which arrangement a locking of the ZVA (1) by means of this key at the locking point (3) effects an activation of the EDW (2) and an unlocking of the ZVA (1) by means of this key at the locking point (3) effects a deactivation of the EDW (2) by means of the common change-over contact (3.1),

characterised in that the control device (2.1) of the EDW (2) is supplied, during execution of the alarm, with a signal for deactivating the EDW (2) by operating the electric switch (3.2), simultaneously clearing the alarm, and in that, in dependence on the potential of the change-over contact (3.1) which is associated with the first locking point (3) and is temporarily connected to the control device (2.1) after the clearing of the alarm,

- the EDW (2) is automatically reactivated with a potential corresponding to the locking state of the ZVA (1), but
- the EDW (2) remains deactivated with a potential corresponding to the unlocking state of the ZVA (1).

2. System according to Claim 1, characterised in that a particular period, at least corresponding to the duration of a complete locking or unlocking process of the ZVA (1), from the clearing of the alarm until the interrogation of the change-over potential by the control device (2.1) of the EDW (2) is preset by means of a timing circuit (2.3).

3. System according to Claim 2, characterised in that the control device (2.1) of the EDW (2), after the clearing of the alarm by means of the electric switch (3.2) remains connected to the change-over contact (3.1) for the particular period due to the fact that the switching device (2.2) is driven by a hold circuit (2.3) which is functionally connected in parallel with the electric switch (3.2).

4. System according to Claim 2, characterised in that the control device (2.1) of the EDW (2) after the alarm has been cleared by means of the electric switch (3.2), is temporarily connected to the change-over contact (3.1) due to the switching device (2.2) being driven by a timing switch (2.3) which measures the particular period.

5. System according to Claims 3 or 4, characterised in that further locking points (4, 5) with associated change-over contacts (4.1, 5.1) are provided and in that, for a reactivation of the EDW (2) at the end of the period, the potential of the change-over contact (3.1) associated with the locking point (3) at the driver's door and of at least one further change-over contact (4.1 or/and 5.1) must correspond to the locking state of the ZVA (1), all change-over contacts (3.1, 4.1, 5.1) also being coupled to ZVA actuating elements associated with the respective locking points (3, 4, 5).

6. System according to Claim 1, characterised in that furthermore, a further locking point (4) is provided with an electric switch (4.2) for clearing the alarm and driving the switching device (2.2) which connects the control device (2.1) of the EDW (2) with the change-over contact (4.1) furthermore associated with this locking point (4), and in that in this case the potential of the change-over contact (3.1 or 4.1) from the associated locking point (3 or 4) of which the alarm is cleared by means of its respective electric switch (3.2 or 4.2), is responsible for a reactivation of the EDW.

7. System according to Claim 6, characterised in that the electric switches (3.2, 4.2) of the locking points (3, 4) are operated by rotating the particular key, independently of its direction of rotation and in each case before the switchover of the change-over contacts (3.1, 4.1) associated with the locking points (3, 4).

8. System according to Claim 6, characterised in that the electric switches (3.2, 4.2) of the locking points (3, 4) are already operated with the complete insertion of the particular key.

9. System according to Claim 6, in which at least one locking point provided with an electric switch can be operated by means of a main key and by means of an auxiliary key, characterised in that the particular key for the uniform control of the ZVA/EDW from both locking points is the main key, whilst no operation of the respective electric switch (3.2, 4.2) of both locking points (3, 4), is possible by means of the auxiliary key but only the control of the ZVA (1) by means of the associated change-over contacts (3.1, 4.1).

10. Combined central locking and burglar alarm system for locks on a motor vehicle, which can be uniformly controlled from a least a first locking point (3), which is particularly arranged in the driver's door, by means of at least one particular key, by means of the potential-changing switch-over of an electric change-over contact (3.1) coupled to the locking point (3), in that the change-over contact (3.1)

- directly controls the central locking system (ZVA,1) on the one hand,
- indirectly controls the burglar alarm system (EDW, 2),

on the other hand, by a switching device (2.2) which connects the change-over contact (3.1) to a control device (2.1) of the EDW (2) at least once an electric switch (3.2) arranged in the locking point (3) is operated at least indirectly by means of the particular key, in which arrangement a locking of the ZVA (1) by means of this key at the locking point (3) effects an activation of the EDW (2) and an unlocking of the ZVA (1) by means of this key at the locking point (3) effects a deactivation of the EDW (2) by means of the common change-over contact (3.1), characterised in that the control device (2.1) of the EDW (2), with execution of the alarm, is supplied with a signal for deactivating the EDW (2) by operating the electric switch (3.2), with simultaneous clearing of the alarm, and in that, in dependence on the potential of only at least one change-over contact (4.1 or/and 5.1), which is associated with a second locking point (4 or/and 5) or an actuating element of the ZVA (1) which operates the second locking point (4 or/and 5) under external power, which change-over contact is temporarily connected to the control device (2.1), after the alarm has been cleared and a particular period has elapsed,

- the EDW (2) is automatically reactivated with a potential corresponding to the locking state of the ZVA (1), but
- the EDW (2) remains deactivated with a potential corresponding to the unlocking state of the ZVA (1).

**Revendications**

1. Dispositif combiné de verrouillage central et antivol pour serrures de véhicule automobile, qui peut être commandé unitairement, à partir d'au moins un premier emplacement de fermeture (3), situé notamment dans la porte côté-conducteur, à l'aide d'au moins une clé déterminée, au moyen d'une commutation, modificatrice de potentiel, d'un contact électrique de commutation (3.1) relié à l'emplacement de fermeture (3), par le fait que ce contact de commutation (3.1) :

- commande d'une part directement le système de verrouillage centralisé (ZVA, 1),
- commande d'autre part le système antivol (EDW, 2) indirectement par l'intermédiaire d'un dispositif de commande (2.2) qui relie alors le contact de commutation (3.1) avec un appareil de commande (2.1) du système EDW (2), lorsqu'un contacteur électrique (3.2), situé dans l'emplacement de fermeture (3), est actionné au moins indirectement par la clé déterminée,

de sorte qu'un verrouillage du système ZVA (1) avec cette clé dans l'emplacement de fermeture (3) produit un amorçage du circuit du système EDW (2) tandis qu'un déverrouillage du système ZVA (1) avec cette clé dans l'emplacement de fermeture (3) produit un désamorçage du système EDW (2) au moyen du contact de commutation commun (3.1),

caractérisé en ce que l'appareil de commande (2.1) du système EDW (2) reçoit, lors d'un déclenchement d'une alarme par actionnement du commutateur électrique (3.2), un signal pour un désamorçage du système EDW (2) avec extinction simultanée de l'alarme et en ce que, en fonction du potentiel du premier contact de commutation (3.1) associé à l'emplacement de fermeture (3) et relié en temps voulu après extinction de l'alarme avec l'appareil de commande (2.1):

- pour un potentiel correspondant à l'état de verrouillage du système ZVA (1), il se produit un réamorçage automatique du système EDW (2) mais cependant
- pour un potentiel correspondant à l'état de déverrouillage du système ZVA (1), le système EDW (2) reste désamorcé.

2. Dispositif selon la revendication 1, caractérisé en ce qu'une période de temps définie, correspondant au moins à la durée d'un processus complet de verrouillage ou de déverrouillage du système ZVA (1), est prédéterminée, au moyen d'une horloge (2.3), depuis l'extinction de l'alarme jusqu'à l'analyse du potentiel du contact de commutation par l'appareil de commande (2.1) du système EDW (2).

3. Dispositif selon la revendication 2, caractérisé en ce que l'appareil de commande (2.1) du système EDW (2), après extinction de l'alarme, reste relié pendant la période de temps déterminée avec le contact de commutation (3.1) au moyen du commutateur électrique (3.2) et par activation du dispositif de commutation (2.2) par un circuit de maintien (2.3) branché fonctionnellement en parallèle au commutateur électrique (3.2).

4. Dispositif selon la revendication 2, caractérisé en ce que l'appareil de commande (2.1) du système EDW (2) est relié en temps voulu avec le contact de commutation (3.1) au moyen du commutateur électrique (3.2) par activation du dispositif de commande (2.2) par une horloge (2.3) mesurant la période de temps déterminée.

5. Dispositif selon la revendication 3 ou 4, caractérisé en ce qu'il est prévu d'autres emplacements de fermeture (4, 5) avec des contacts de commutation associés (4.1, 5.1 ) et en ce que, pour un réamorçage du système EDW (2) à la fin de la période de temps, le potentiel du contact de commutation (3.1), associé à l'emplacement de fermeture (3) situé dans la porte côté-conducteur et au moins le potentiel d'au moins un autre contact de commutation (4.1 ou/et 5.1) doivent correspondre à l'état de verrouillage du système ZVA (1), tous les contacts de commutation (3.1, 4.1, 5.1) étant en outre reliés aux éléments d'actionnement de système ZVA qui sont associés aux emplacements de fermeture correspondants (3, 4, 5).

6. Dispositif selon la revendication 1, caractérisé en ce qu'il est en outre prévu un autre emplacement de fermeture (4) comportant un contacteur électrique (4.2) pour effacement d'alarme et pour activation du dispositif de commutation (2.2), qui relie l'appareil de commande (2.1) du système EDW (2) avec le contact de commutation (4.1) associé en outre à cet emplacement de fermeture (4) et en ce qu'à chaque fois le potentiel du contact de commutation (3.1 ou 4.1) est déterminant pour un réamorçage du système EDW dont un emplacement de fermeture associé (3 ou 4 ) a produit une extinction d'alarme au moyen du commutateur électrique correspondant (3.2 ou 4.2).

7. Dispositif selon la revendication 6, caractérisé en ce que les commutateurs électriques (3.2, 4.2) des emplacements de fermeture (3.4) sont actionnés par rotation de la clé déterminée, indépendamment de son sens de rotation et à chaque fois avant la commutation des contacts de commutation (3.1, 4.1) associés aux emplacements de fermeture (3.4).

8. Dispositif selon la revendication 6, caractérisé en ce que les commutateurs électriques (3.2, 4.2) des emplacements de fermeture (3.4) sont déjà actionnés lors d'un engagement complet de la clé déterminée.

9. Dispositif salon la revendication 6, dans lequel au moins un emplacement de fermeture, pourvu d'un commutateur électrique, peut être actionné par une clé principale et par une clé secondaire, caractérisé en ce que la clé déterminée servant à la commande unitaire des systèmes ZVA/EDW à partir des deux emplacements de fermeture est la clé principale, alors qu'avec la clé secondaire, il n'est pas possible d'actionner le commutateur électrique correspondant (3.2, 4.2) des deux emplacements de fermeture (3, 4) mais seule la commande du système ZVA (1) est possible au moyen des contacts de commutation associés (3.1, 4.1).

10. Dispositif combiné de verrouillage central et antivol pour serrures de véhicule automobile, qui peut être commandé unitairement, à partir d'au moins un premier emplacement de fermeture (3), situé notamment dans la porte côté-conducteur, à l'aide d'au moins une clé déterminée, au moyen d'une commutation, modificatrice de potentiel, d'un contact électrique de commutation (3.1) relié à l'emplacement de fermeture (3), par le fait que ce contact de commutation (3.1) :
    - commande d'une part directement le système de verrouillage centralisé (ZVA,1),
    - commande d'autre part le système antivol (EDW, 2) indirectement par l'intermédiaire d'un dispositif de commande (2.2) qui relie alors le contact de commutation (3.1) avec un appareil de commande (2.1) du système EDW (2), lorsqu'un contacteur électrique (3.2), situé dans l'emplacement de fermeture (3), est actionné au moins indirectement par la clé déterminée,

    de sorte qu'un verrouillage du système ZVA (1) avec cette clé dans l'emplacement de fermeture (3) produit un amorçage du circuit du système EDW (2) tandis qu'un déverrouillage du système ZVA (1) avec cette clé dans l'emplacement de fermeture (3) produit un désamorçage du système EDW (2) au moyen du contact de commutation commun (3.1),

    caractérisé en ce que l'appareil de commande (2.1) du système EDW (2) reçoit, lors d'un déclenchement d'alarme, par actionnement du commutateur électrique (3.2), un signal pour un désamorçage du système EDW (2) avec extinction simultanée de l'alarme et en ce que, en fonction du potentiel seulement d'au moins un contact de commutation (4.1 ou/et 5.1), qui est associé à un second emplacement de fermeture (4 ou/et 5) ou bien à un élément d'actionnement, commandé par une force extérieure, de ce second emplacement de fermeture (4 ou/et 5) et qui, après extinction de l'alarme et après écoulement d'une période de temps déterminée, est relié en temps voulu à l'appareil de commande (2.1):

- pour un potentiel correspondant à l'état de verrouillage du système ZVA (1), il se produit un réamorçage automatique du circuit du système EDW (2) mais cependant,
- pour un potentiel correspondant à l'état de déverrouillage du système ZVA (1)1, le système EDW (2) reste désamorcé.

EP 0 313 772 B1

# Fig. 1

10

Fig. 2

a)

Schließstelle?
3/4

3.1 ⊕ ?

4.1 ⊕ ?

EDW schärfen

ENDE

b)

Wartezeit

3.1 ⊕ ?

4.1 ⊕ ?

EDW schärfen

ENDE

EDW entschärft
Alarm gelöscht

3.2
4.2

11